# FASCICULE DE BREVET EUROPEEN

(11) **EP 1 910 041 B1**
(45) Date de publication et mention de la délivrance du brevet: **07.09.2016**
(21) Numéro de dépôt: 06792660.0
(22) Date de dépôt: 02.08.2006
(51) Int. Cl.: B25J 15/04, F16D 1/112, B65G 33/38

(54) **MANIPULATEUR ET INSTALLATION LE COMPORTANT**
MANIPULATOR UND ANLAGE DAMIT
MANIPULATOR AND INSTALLATION COMPRISING THE SAME

(30) Priorité: 05.08.2005 FR 0508407
(43) Date de publication de la demande: 16.04.2008
(73) Titulaire: ROXANE S.A., 34980 Saint Gely Du Fesc (FR)
(72) Inventeur: SOLIGNAC, Jean-Pierre, F-34270 Saint Mathieu De Treviers (FR)
(74) Mandataire: Cornuejols, Georges
(86) Numéro de dépôt international: PCT/EP2006/064985
(87) Numéro de publication internationale: WO 2007/017448

(56) Documents cités:
- EP-A- 0 287 708
- EP-A- 1 475 325
- EP-A- 1 559 652
- US-A- 5 655 692
- US-A1- 2005 042 943

## Description

### Domaine technique

La présente invention est relative à un manipulateur comprenant un bras apte à transmettre un mouvement de rotation et un mouvement de translation selon un même axe géométrique à un organe récepteur apte à recevoir en accouplement le bras du dispositif manipulateur pour être entraîné par ce dernier en rotation et/ou en translation selon ce même axe géométrique et ce dans un sens et dans l'autre, tant pour ce qui concerne le mouvement de rotation que le mouvement de translation, les mouvements de translation et de rotation pouvant être opérés simultanément.

### Technique antérieure

On connaît de l'état de la technique des manipulateurs comportant chacun un bras télescopique ou agencé en compas pourvu en extrémité d'une pince de préhension à action commandée. Avec de tels manipulateurs, il est possible de transmettre à un organe récepteur distal, saisi par la pince, un mouvement de translation et de rotation. Ces manipulateurs comportent de nombreux moteurs d'actionnement. Ainsi ils comportent pour le déplacement du bras et de la pince généralement trois moteurs et pour l'actionnement des mâchoires de la pince au moins un moteur.

Ces manipulateurs connus demeurent relativement complexes et onéreux et sont réservés à l'accomplissement de tâches particulières.

On connaît également de la demande de brevet européen EP1 559 652, une installation de délivrance de produits en poudres comprenant une pluralité de distributeur de poudre comprenant en partie inférieure une vis sans fin de distribution actionnable de l'extérieur. La vis de distribution comporte un embout terminal de manoeuvre destiné à coopérer en accouplement avec un mécanisme moteur qui est apte à transmettre à la vis un mouvement de rotation. Ce mécanisme est également apte à déplacer la vis axialement d'une première position d'obturation d'un orifice de délivrance de la poudre, vers une seconde position de dégagement de cet orifice et ce à l'encontre de l'action d'un organe élastique de rappel.

Avec de tels moyens l'immobilisation en translation de la vis sans fin par rapport au mécanisme moteur est imparfaite ; le mécanisme moteur ne peut en aucune façon exercer une quelconque traction sur la vis pour la ramener en position d'obturation.

### Exposé de l'invention

La présente invention a pour objet un manipulateur d'une conception simple apte à s'accoupler à un organe récepteur pour lui transmettre un mouvement de rotation et de translation, ces deux mouvements pouvant être simultanés.

Un autre objet de la présente invention est un manipulateur doté d'un nombre limité de moteurs pour pouvoir transmettre à l'organe récepteur tous les mouvements de translation et rotation et pour pouvoir assurer les actions d'accouplement, désaccouplement, verrouillage et déverrouillage à l'organe récepteur.

Un autre objet de la présente invention est un manipulateur apte à transmettre des mouvements de rotation et de translation axiale selon des accélérations et vitesses variables et ce dans un sens et dans l'autre.

Un autre objet de la présente invention est un manipulateur qui puisse s'accoupler et se verrouiller à un organe récepteur malgré les éventuels écarts positionnels de cet organe par rapport à une position théorique idéale.

Un autre objet de la présente invention est de pouvoir assurer l'accouplement et le verrouillage du manipulateur à l'organe récepteur malgré un désalignement de l'un par rapport à l'autre.

Un autre objet de la présente invention est de pouvoir assurer l'entraînement en rotation et en translation de l'organe récepteur sans aucun jeu.

À cet effet le manipulateur selon l'invention, présente un bras axialement extensible, avec carter, lequel bras porte en extrémité distale un organe d'accouplement temporaire à un organe récepteur, pour pouvoir transmettre à ce dernier un mouvement de rotation et/ou un mouvement de translation selon un axe géométrique (AA') commun, et dans lequel:
- l'organe d'accouplement temporaire est doté d'au moins un élément saillant ou au moins une cavité d'accouplement apte à coopérer en relation d'accouplement par emboîtement de forme avec au moins une cavité d'accouplement ou un élément saillant formé dans l'organe récepteur, de sorte que l'organe d'accouplement est apte à transmettre un couple à l'organe récepteur,
- l'organe d'accouplement temporaire est accouplé à l'extrémité distale d'un arbre de transmission de couple et de mouvement, s'étendant selon l'axe géométrique précité,
- l'arbre de transmission est accouplé à l'arbre de sortie rotatif d'un organe moteur du bras et porté par un support mobile en translation et fixe en rotation actionné par un second organe moteur du bras, le manipulateur étant en outre caractérisé en ce que:
   - sur l'arbre de transmission est montée de manière fixe en translation par rapport au dit arbre et avec une latitude de mouvement angulaire limité autour de l'axe géométrique (AA'), une pièce de verrouillage présentant en extrémité distale au moins une saillie radiale de verrouillage,
   - un moyen de frein, en position de complet déploiement du bras, agit sur la pièce de verrouillage pour interdire la rotation de ladite pièce de verrouillage autour de l'axe géométrique (AA').
   - l'organe d'accouplement temporaire est apte à amener, par rotation de l'organe récepteur, une saillie radiale de verrouillage dont est dotée l'organe récepteur en arrière et en regard de la saillie de verrouillage de la pièce de verrouillage, pour assurer une liaison en translation avec l'organe récepteur, ou bien est apte à dégager cette saillie, pour rompre la liaison en translation avec l'organe récepteur et pouvoir désolidariser l'organe récepteur de l'organe d'accouplement temporaire par rétractation du bras, l'écart angulaire entre les saillies de verrouillage en position déverrouillée étant égale ou inférieure à l'amplitude du mouvement angulaire permis de la pièce de verrouillage par rapport à l'arbre de transmission.

Ainsi avec deux moteurs seulement il est possible d'assurer la rotation dans un sens et dans l'autre et la translation dans un sens et dans l'autre de l'organe récepteur ainsi que les fonctions d'accouplement désaccouplement et verrouillage déverrouillage.

L'entraînement en translation de l'organe récepteur dans le sens du déploiement du bras du manipulateur résulte de l'effet de l'effort de poussée exercée par l'organe d'accouplement sur l'organe récepteur. En revanche, l'entraînement en translation de l'organe récepteur dans le sens de la rétraction du bras résulte de l'action de poussée exercée sur la saillie de verrouillage que présente l'organe récepteur, par la saillie de verrouillage que présente la pièce de verrouillage.

Selon une autre caractéristique de l'invention, l'élément saillant que présente l'organe d'accouplement temporaire est apte à être engagé en léger serrage dans la cavité de l'organe récepteur.

Cette disposition assure une transmission sans jeu angulaire, du mouvement de rotation à l'organe récepteur.

Selon une autre caractéristique de l'invention, un organe élastique est monté en compression entre une face de l'organe récepteur et l'organe d'accouplement pour exercer sur ce dernier un effort axial sous l'effet duquel, en position de verrouillage en translation, la ou les saillie(s) de verrouillage de la pièce de verrouillage est ou sont fermement appliquée(s) contre la ou les saillie(s) de verrouillage de l'organe récepteur pour rattraper tout jeu axial entre ledit organe d'accouplement et ledit organe récepteur.

Selon encore une autre caractéristique de l'invention, un mécanisme d'indexation à bille est interposé entre la pièce de verrouillage et l'organe d'accouplement temporaire afin d'immobiliser ladite pièce de verrouillage en rotation par rapport à l'arbre de commande lorsque le moyen de frein n'agit plus sur ladite pièce, ledit mécanisme assurant de plus le maintien de la pièce en appui contre un collet formé en extrémité distale de l'arbre.

Ces deux dispositions suppriment tout jeu axial entre le manipulateur et l'organe récepteur.

Selon une autre caractéristique de l'invention, l'organe récepteur présente plusieurs cavités d'accouplement et l'organe d'accouplement temporaire plusieurs éléments saillants d'accouplement. Cette disposition combinée à l'engagement sans jeu des éléments saillants dans les cavités d'accouplement permet de rattraper un désalignement de l'organe récepteur par rapport au manipulateur.

### Description sommaire des dessins

D'autres avantages, buts et caractéristiques de l'invention, apparaîtront à la lecture de la description d'une forme préférée de réalisation, donnée à titre d'exemple non limitatif en se référant aux dessins annexés en lesquels :
- la figure 1 est une vue en coupe d'une première forme de réalisation d'un manipulateur selon l'invention,

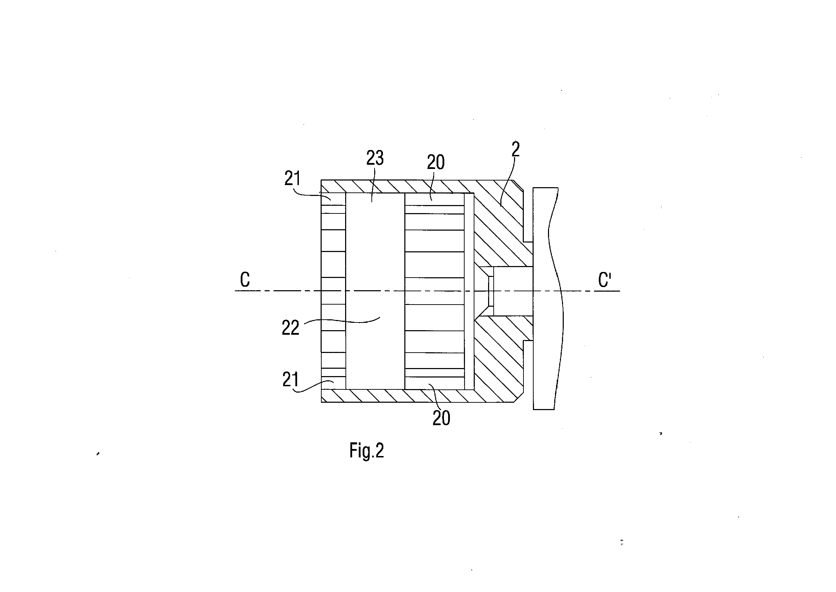

- la figure 2 est une vue en coupe d'un organe récepteur du manipulateur selon l'invention,
- la figure 3 est une vue en coupe d'un manipulateur, selon la première forme de réalisation, en relation d'accouplement avec son organe récepteur,
- la figure 4 est une vue en coupe d'une deuxième forme de réalisation d'un manipulateur selon l'invention en relation d'accouplement avec son organe récepteur,
- la figure 5 est une vue d'une troisième forme de réalisation d'un manipulateur selon l'invention en relation d'accouplement avec son organe récepteur fixé à un dispositif de distribution de produit pulvérulents en quantités dosées,
- la figure 6 est une vue en coupe selon la ligne BB de la figure 5,
- la figure 7 est une vue de dessus d'une installation selon l'invention, comportant un manipulateur selon l'invention et plusieurs dispositifs de distribution de produits pulvérulents en quantités dosées.

### Meilleure manière de réaliser l'invention

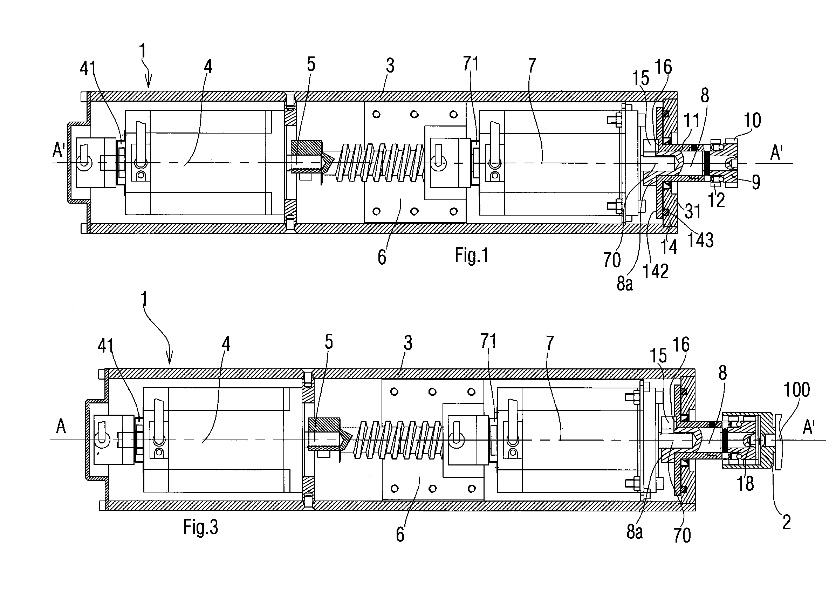

En figure 1 est représenté un manipulateur 1 selon l'invention comportant un bras de transmission de mouvement. Comme on peut le voir sur cette figure le bras est apte à être accouplé et verrouillé à un organe récepteur 2 pour lui transmettre un mouvement de rotation dans un sens et dans l'autre selon un axe géométrique AA' et/ou un mouvement de translation dans un sens et dans l'autre toujours selon l'axe AA'. L'organe récepteur 2 peut être fixé à un organe de commande 101 d'un appareil 100 pour commander et contrôler le fonctionnement de ce dernier. Dans une application préférée de l'invention, cet appareil sans que cela soit limitatif peut être un dispositif de prélèvement et de dosage de produit pulvérulent tel que décrit dans le brevet EP 1 009 697 et l'organe de commande est constitué par la tige de l'obturateur.

Le bras du manipulateur est axialement extensible selon l'axe longitudinal AA'. Ce bras est doté d'un carter 3 étanche, pourvu d'une paroi terminale proximale et d'une paroi terminale distale 31 opposée à la précédente. Ces deux parois, planes, sont perpendiculaires à l'axe géométrique AA'.

Dans ce carter est monté fixement un premier organe moteur 4 dont l'arbre de sortie rotatif 5 présente un pas de vis et est engagé en vissage dans un taraudage pratiqué dans un support 6 monté dans le carter 3 du bras de manière fixe en rotation, mais avec possibilité de déplacement en translation selon l'axe géométrique AA'. Selon une forme préférée de réalisation, le support 6 est guidé en translation selon l'axe AA' par les faces longitudinales internes du carter 3.

À ce support mobile 6, toujours dans le carter 3 du bras, est fixé un second organe moteur 7 présentant un arbre de sortie rotatif 70 positionné selon l'axe AA'. À cet arbre de sortie est accouplé un arbre 8 de transmission de couple et de mouvement se développant selon l'axe AA'. Cet arbre 8, extérieurement au carter 3, reçoit en fixation en partie distale, un organe 9 d'accouplement temporaire à l'organe récepteur 2.

Cet organe d'accouplement temporaire 9 présente un élément saillant 10 d'accouplement apte à coopérer en relation d'accouplement par emboîtement de forme avec une cavité 20 d'accouplement que présente l'organe récepteur.

Il va de soi que sans sortir du domaine des équivalents techniques, la cavité d'accouplement pourra être formée dans l'organe d'accouplement 9 et que l'élément saillant d'accouplement 10 pourra être formé sur l'organe récepteur 2.

L'activation de l'organe moteur 4 se traduit, selon le sens de rotation de son arbre de sortie, par un mouvement d'éloignement ou par un mouvement de rapprochement communiqué au support 6 et par voie de conséquence par un éloignement ou un rapprochement de l'organe d'accouplement 9. Le premier moteur 4 sera activé dans le sens de l'éloignement de l'organe d'accouplement temporaire 9 pour accoupler ce dernier à l'organe récepteur 2. Après verrouillage, l'activation du moteur 4 se traduira par un actionnement en translation de l'organe récepteur 4.

L'activation du second moteur 7 se traduit par la mise en rotation de l'organe d'accouplement 9 selon l'axe AA' et par voie et par voie de conséquence par l'entraînement en rotation de l'organe récepteur 2.

Pour contrôler ces mouvements de translation et de rotation, les deux moteurs 4 et 7 sont du type pas-à-pas et comportent chacun un codeur 41, 71. Ces codeurs sont connectés électriquement à une unité de contrôle et de commande, non représentée, qui contrôle et commande notamment la mise en fonctionnement et l'arrêt des moteurs pas-à-pas à partir des informations données par les codeurs et à partir d'un logiciel adapté chargé en mémoire de l'unité de contrôle et de commande.

De préférence, l'élément saillant 10 que comporte l'organe d'accouplement temporaire 9 se développe de manière radiale par rapport à l'axe AA'. En variante cet élément saillant 10 se développe de manière parallèle à l'axe AA'.

Selon la forme préférée de réalisation, l'organe d'accouplement temporaire 9 présente un noyau, par exemple de forme cylindrique admettant comme axe de révolution l'axe AA' et l'élément saillant d'accouplement 10 est radial au dit noyau et forme saillie sur la surface cylindrique de ce dernier. Cet organe d'accouplement 9 est apte à coopérer en relation d'accouplement avec l'organe récepteur 2 par emboîtement de forme de l'élément saillant 10 dans une cavité 20 formée dans ledit organe récepteur 2.

Pour éviter tout jeu angulaire entre l'élément saillant 10 et la cavité 20, l'élément saillant s'engage en léger serrage dans ladite cavité.

L'organe récepteur 2 reçoit tant le noyau de l'organe d'accouplement 9 que l'élément saillant 10 que ce dernier comporte. À cet effet l'organe récepteur 2 est doté d'un alésage cylindrique borgne 22 dans lequel s'engage le noyau de l'organe d'accouplement et la ou les cavité(s) 20 se développe ou se développent de manière radiale au dit alésage et débouche ou débouchent dans ce dernier. Cet alésage borgne possède un axe géométrique de révolution CC', parallèle à ses génératrices. En relation d'accouplement, l'axe géométrique de révolution CC' est confondu avec l'axe géométrique AA'.

Avantageusement, le noyau de l'organe d'accouplement 9 présente plusieurs éléments saillants 10 angulairement répartis de manière régulière autour de l'axe AA'. Ces éléments saillants 10 forment préférentiellement une denture d'engrenage. Les cavités 20 en nombre égal au nombre d'éléments saillants 10 sont angulairement réparties de manière régulière autour de l'axe de révolution CC' de l'alésage borgne 22. Ces cavités 20 délimitent entre elles la denture d'un engrenage.

Ces dispositions permettent de rattraper un désalignement entre l'organe d'accouplement et l'organe récepteur 2 et l'engagement en léger serrage des éléments saillants 10 dans les cavités 20 a pour effet de supprimer tout jeu angulaire entre l'organe d'accouplement 9 et l'organe récepteur 2 et tout jeu radial entre ces deux organes 9 et 2.

Selon une première forme de réalisation, l'engrenage que forment les saillies 10 est droit, mais préférentiellement, selon une seconde forme de réalisation l'engrenage que forment les saillies 10 est conique afin de faciliter l'engagement de ce dernier dans l'engrenage délimité par les cavités 20. Ainsi en cas désalignement entre l'organe récepteur et le bras, la conicité de l'engrenage que constituent les éléments saillants 10 permettra de faciliter l'engagement de ce dernier, dans l'engrenage formé par les cavités 20.

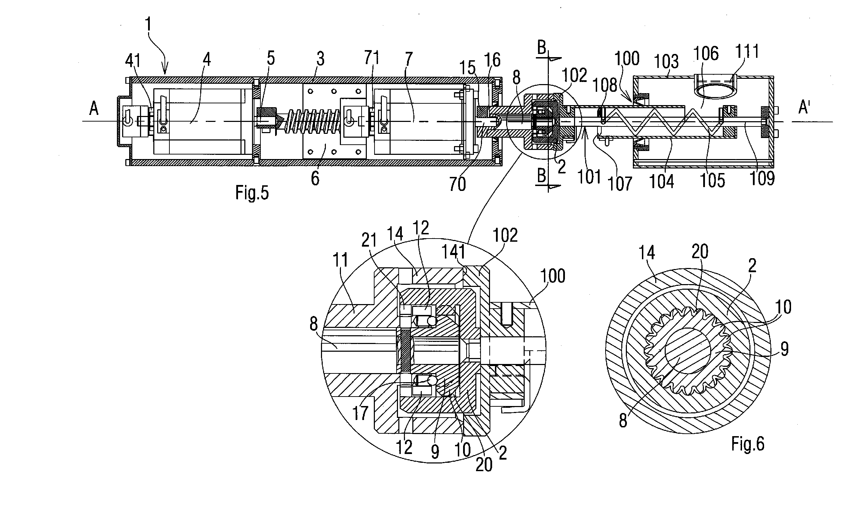

Préférentiellement, comme on peut le voir plus particulièrement en figure 6, chaque cavité 20 présente une section droite en demi-cercle et la face de tête de la saillie (face correspondant au cylindre de tête pour un engrenage) vient porter sans jeu, par ces deux bords longitudinaux, contre la face semi cylindrique de la cavité 20.

Une pièce de verrouillage 11 est montée sur l'arbre de transmission 8 de manière fixe en translation par rapport au dit arbre mais avec une latitude de mouvement angulaire limité autour de l'axe géométrique AA'.

La pièce de verrouillage 11 est immobilisée en translation sur l'arbre de transmission 8 entre un collet 8a que ce dernier comporte d'une part et l'organe d'accouplement 9 d'autre part. Comme on peut le voir sur les figures, le collet 8a est formé en extrémité proximale de l'arbre 8. Ce collet 8a est interne au carter 3.

Cette pièce de verrouillage 11 se présente préférentiellement sous forme d'un fourreau cylindrique avec alésage traversant cylindrique, l'arbre cylindrique de transmission 8 étant engagé dans ledit alésage avec possibilité de pivotement dans ce dernier. Cette pièce de verrouillage 11 est engagée dans un perçage formé dans la paroi terminale distale 31 du carter 3. Pour assurer l'étanchéité du volume interne du carter 3, un joint d'étanchéité connu en soi est placé dans le perçage formé dans 31, ce joint d'étanchéité par sa lèvre d'étanchéité venant en appui contre la pièce de verrouillage 11.

Cette pièce de verrouillage 11 présente en extrémité distale au moins une saillie radiale 12 de verrouillage en translation et l'organe récepteur 2 est équipé d'au moins une saillie radiale 21 de verrouillage en translation dirigée vers l'axe de révolution CC' de l'alésage borgne 22.

Lorsque l'organe d'accouplement 9 est engagé dans l'organe récepteur 2, la ou les saillie(s) radiale(s) 12 de la pièce de verrouillage 11 vient ou viennent se loger dans un chambrage 23 cylindrique formé dans l'alésage 22 entre d'une part l'engrenage délimité par les cavités 20 et d'autre part la ou les saillies 21.

La liaison en translation du manipulateur 1 à l'organe récepteur 2 est assurée en positionnant, par pivotement angulaire de l'organe récepteur 2, la saillie radiale de verrouillage en translation 21 que comporte cet organe 2, en arrière et en regard de la saillie radiale 12 de verrouillage en translation que comporte la pièce de verrouillage 11.

Le pivotement angulaire de l'organe récepteur 2 résulte de l'action de l'organe moteur 7 sur l'organe d'accouplement temporaire 9 par l'intermédiaire de l'arbre de transmission 8. La rotation de l'arbre de sortie du moteur 7 et donc de l'organe récepteur 2 vers la position de verrouillage en translation est contrôlée par le codeur 71 associé à ce moteur 7. L'action de déverrouillage en translation s'opère de la manière inverse.

L'écart angulaire présent entre les saillies de verrouillage en translation 12 et 21, avant verrouillage en translation, est égal ou inférieur à l'amplitude du mouvement angulaire permis de la pièce de verrouillage 11 par rapport à l'arbre de transmission 8.

Pour qu'en position de verrouillage en translation, la ou les saillie(s) 12 de la pièce de verrouillage 11 puisse ou puissent être fermement appliquée(s) contre la ou les saillie(s) 21 pour rattraper tout jeu axial entre l'organe d'accouplement 9 et l'organe récepteur 2 est prévu un organe élastique monté en compression entre une face de l'organe récepteur 2 et l'organe d'accouplement 9 pour exercer sur ces derniers un effort axial.

Dans la forme préférée de réalisation, l'organe élastique 18 est interposé entre le fond de l'alésage borgne 22 de l'organe récepteur et l'organe d'accouplement 9, ce dernier étant immobilisé en translation par rapport à la dite pièce de verrouillage 11.

Selon la forme préférée de réalisation, la pièce de verrouillage 11 et l'organe récepteur 2 présentent plusieurs saillies de verrouillage 12, 21 angulairement réparties de manière régulière autour de l'axe AA' pour les saillies 12 et autour de l'axe géométrique de révolution CC' de l'alésage borgne 22 pour les saillies 21. Le nombre de saillies de verrouillage 12 est égal au nombre de saillie de verrouillage 21 et est égal au nombre d'éléments saillants 10 que présente l'organe d'accouplement 9. L'intervalle libre entre deux saillies de verrouillage 21 consécutives est suffisant pour permettre le libre passage des saillies 10 et 12 lors de l'engagement de l'organe d'accouplement 9 dans l'organe récepteur 2 ou bien lors de son retrait.

Dans la forme préférée de réalisation, l'intervalle entre deux saillies de verrouillage 21 consécutives présente une section droite se développant selon un demi-cercle.

Pendant les actions de verrouillage et déverrouillage en translation, il est nécessaire d'immobiliser en rotation la pièce de verrouillage 11. À cet effet, il est prévu un moyen de frein qui agit sur la pièce de verrouillage 11 en position de complet déploiement du bras.

Avantageusement, le moyen de frein comprend d'une part une saillie radiale d'arrêt 14 portée par la pièce de verrouillage 11 et d'autre part un élément fixe contre lequel est amenée en pression ladite saillie radiale 14 en position de complet déploiement du bras.

Cette saillie radiale d'arrêt 14 présente au moins une face plane 141 perpendiculaire à l'axe AA' destinée à être amenée en pression contre l'élément fixe pour réaliser la fonction de freinage.

Le moyen de frein est soit interne au carter 3 du bras soit externe au carter 3 du bras.

Selon la forme de réalisation illustrée en figure 1, le moyen de frein est interne au bras. La saillie radiale 14 se présente sous la forme d'une couronne circulaire présentant deux faces planes opposées à savoir une face plane distale 141 et une face plane proximale 142, ces deux faces étant perpendiculaires à l'axe AA'. En position de complet déploiement du bras, la saillie radiale 14 par sa face distale 141 vient comprimer un organe élastiquement compressible 143 contre l'élément fixe, ce qui assure l'immobilisation en rotation de la pièce 11 sous l'effet de l'intensité des forces d'adhérences entre l'organe élastiquement compressible 143 et la saillie radiale 14 d'une part et entre ledit organe 143 et l'élément fixe d'autre part.

L'élément fixe est avantageusement constitué par une paroi fixe du bras, préférentiellement par la paroi terminale distale 31 du carter 3.

L'élément élastiquement compressible 143 est porté par la saillie d'arrêt 14 ou par la paroi fixe du bras.

Avantageusement l'élément élastiquement compressible 143, constitué par un anneau torique en matière synthétique, est engagé dans une rainure creusée dans la paroi terminale 31 depuis la face de cette dernière, interne au volume du carter.

Grâce à la compressibilité de l'élément 143, il est possible d'absorber les écarts dimensionnels qui peuvent exister entre le bras 1 et l'organe récepteur 2 et qui pourraient interdire la liaison en translation et en rotation entre ces deux éléments.

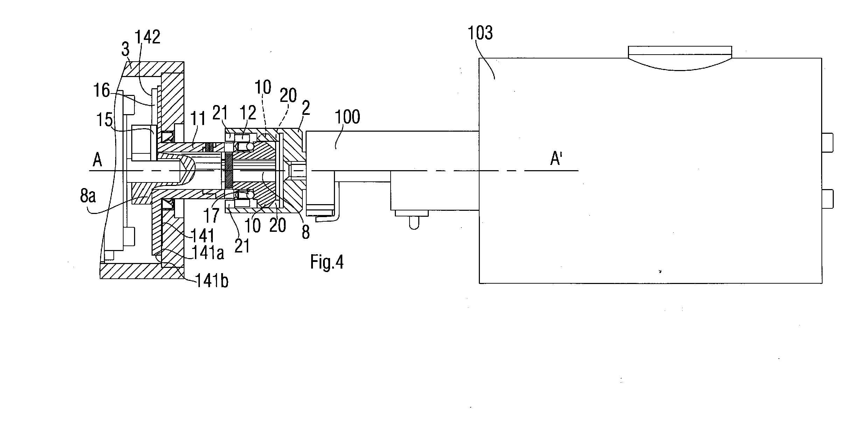

Selon la forme de réalisation illustrée en figure 4, le moyen de frein est toujours interne au bras. La face distale 141 de la saillie d'arrêt 14, laquelle de préférence est une couronne circulaire, présente une bordure de frein 141a courant le long de son bord externe. En position de complet déploiement du bras, la bordure de frein 141 a se trouve appliquée avec pression contre l'élément fixe du bras. Les forces d'adhérence entre la bordure de frein 141 a et l'élément fixe s'opposent à la rotation selon l'axe AA' de la pièce de verrouillage 11.

Avantageusement, l'élément fixe est une paroi du bras, par exemple la paroi terminale distale 31 du carter 3. L'élément fixe du bras, comme on peut le voir en figure 4 présente dans le volume du carter 3 une bordure plane d'appui 141b perpendiculaire à l'axe AA', contre laquelle est appliquée la bordure de frein 141 a en position de complet déploiement du bras. En retrait de la bordure d'appui 141 b, la paroi 31 présente un décrochement. Une telle disposition est garante d'un freinage de la pièce 11 à distance de l'axe AA' ce qui maintient un couple de freinage élevé.

En variante, la bordure de frein 141 a formera une surépaisseur sur face distale 141 a de la saillie 14.

Pour améliorer l'adhérence entre la bordure de frein et la face plane interne au carter de l'élément fixe, des stries pourront être ménagées soit sur ladite bordure soit sur ladite face interne soit sur ladite bordure et sur ladite face interne.

Pour permettre de rattraper l'éventuel écart positionnel de l'organe récepteur 2, la largeur des dents d'engrenage délimité par les saillies 20 sera augmentée, il en sera de même pour la largeur du chambrage 23.

Selon la forme de réalisation illustrée en figure 5, le moyen de frein est externe au bras. La saillie radiale d'arrêt 14 est portée en extrémité distale de la pièce de verrouillage 11 et cette dernière en extrémité distale forme une cloche venant autour de la ou des saillie(s) de verrouillage 12 et autour de l'organe d'accouplement temporaire 9. La face plane 141 est formée par la rive distale de la cloche.

En relation d'accouplement avec l'organe récepteur 2, cette cloche vient autour de ce dernier. En position de complet déploiement du bras, la face plane 141 vient en pression contre un élément fixe constitué par une paroi 102 de l'appareil 100 à commander par l'intermédiaire de l'organe récepteur 2. Cette disposition trouve son intérêt dans le fait qu'il devient maintenant inutile de prévoir des solutions de compensation des écarts positionnels axiaux de l'organe récepteur 2.

Pour verrouiller la rotation de la pièce de verrouillage 11 par rapport à l'arbre de commande 8 lorsque le moyen de frein n'agit plus sur ladite pièce 11, est prévu un mécanisme d'indexation à billes 17 interposé entre la pièce de verrouillage 11 et l'organe d'accouplement temporaire 9.

Ce mécanisme permet d'immobiliser la pièce de verrouillage 11 soit en position verrouillée selon laquelle les éléments saillants 12 sont en regard des éléments saillants 21 de l'organe récepteur soit en position déverrouillée selon laquelle les éléments saillants 12 sont en regard des intervalles ménagés entre les éléments saillants 21.

Ce mécanisme de verrouillage a également pour effet de maintenir appliquée la pièce de verrouillage 11 contre le collet 8a de l'arbre de transmission 8 et d'interdire tout déplacement axial même limité de cette pièce sur l'arbre de transmission 8.

Ce mécanisme d'indexation est formé de plusieurs perçages borgnes pratiqués par exemple dans la pièce de verrouillage 11 de manière parallèle à l'axe AA', dans chacun desquels est logée une bille maintenue en appui contre l'organe d'accouplement 9 par un ressort à spires. En position de verrouillage en translation ou en position de déverrouillage, les billes sont logées dans des empreintes d'indexation en creux, formées dans l'organe d'accouplement 9. L'action exercée par les billes du fait de la poussée des ressorts permet d'appliquer la pièce de verrouillage contre le collet 8a de l'arbre 8.

Pour limiter le mouvement de rotation de la pièce de verrouillage par rapport à l'arbre de transmission 8, l'un des éléments pièce de verrouillage ou arbre de transmission 8 comporte un doigt saillant 15 et l'autre élément possède un logement 16 pour recevoir le doigt saillant, ce logement 16 selon une section droite se développant en arc secteur de couronne circulaire.

Selon une première forme de réalisation, le doigt saillant 15 est porté par l'arbre de transmission 8 et le logement 16 est formé dans la pièce de verrouillage 11.

Ce logement 16 peut être interne à la pièce de verrouillage 11 et déboucher dans l'alésage interne que cette dernière comporte. Dans ce cas de figure, le doigt saillant est fixé radialement à l'arbre de transmission 8.

Selon une deuxième forme de réalisation du manipulateur telle qu'illustrée en figure 4, le logement 16 est formé dans la couronne 14 de la pièce 11 et le doigt saillant 15 fixé à l'arbre 8 s'étend parallèlement à l'axe de ce dernier.

Selon la troisième forme de réalisation du manipulateur telle qu'illustrée en figure 5, le doigt saillant 15 est toujours fixé à l'arbre 8, et le logement 16 est formé en extrémité proximale de la pièce de verrouillage 11.

Selon la deuxième et la troisième forme de réalisation, le doigt saillant 15 est rigidement porté par une embase qui se fixe sur un méplat formé en extrémité proximale de l'arbre 8.

Avantageusement le méplat formé sur l'arbre 8, dégage une ouverture radiale vers un alésage borgne interne de ce dernier prévu pour recevoir l'arbre de sortie 70 du moteur 7. Avantageusement l'arbre de sortie 70 présente aussi un méplat contre lequel est appliquée l'embase support du doigt saillant 16. Cette disposition assure la liaison mécanique entre l'arbre de sortie 70 du moteur 7 et l'arbre de transmission 8.

Enfin le volume interne du carter étanche 3 sera pressurisé de façon que le manipulateur puisse fonctionner en milieux explosifs ou corrosifs.

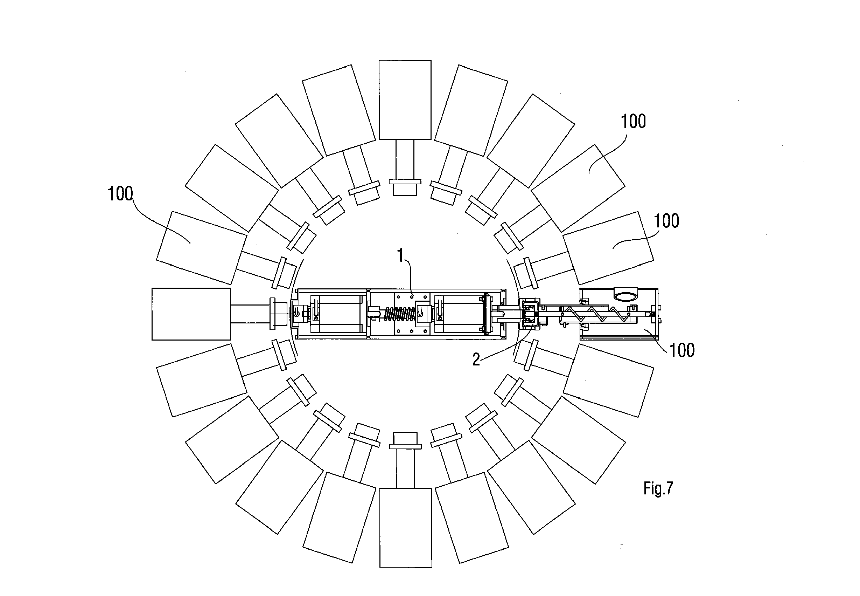

En figure 7 est représentée une installation comportant un manipulateur selon l'invention et au moins un appareil 100 avec organe de commande 101 associé à un organe récepteur 2.

Préférentiellement, l'installation selon l'invention comporte plusieurs appareils 100, le manipulateur étant déplaçable par rapport à ces appareils pour être positionné au choix en regard de l'un des appareils et pour établir une relation d'accouplement avec cet appareil.

Selon une première forme de réalisation, telle que représentée en figure 7, les appareils 100 sont disposés selon un plan horizontal en cercle autour du manipulateur et ce dernier, par exemple par son carter 3 est monté sur une tourelle d'orientation qui le positionne en regard de l'appareil sélectionné.

Selon une autre forme de réalisation, non représentée, les appareils 100 sont disposés sur une platine horizontale déplaçable dans le plan horizontal et mobilisée par un ensemble moteur pour amener l'appareil choisi en regard du bras du manipulateur. Selon cette disposition les appareils 100 peuvent être disposés en cercle sur la platine, cette dernière étant alors déplaçable en rotation ou bien en rangée, ladite platine étant alors déplaçable en translation.

Selon une autre forme de réalisation, les appareils 100 sont organisés suivant une rangée et le manipulateur est monté sur un chariot qui le positionne en regard de l'appareil 100 sélectionné.

À titre d'exemple, chaque appareil est constitué par un dispositif de dosage de produit pulvérulent, ce dispositif comportant un réservoir de poudre 103, rotatif et un conduit 104 de distribution de poudre. Un tel dispositif sans que cela soit limitatif peut être celui décrit dans le brevet EP 1 009 697.

En figures 4, 5 et 7 est représenté un tel dispositif. Comme on peut le voir, ce dernier comporte un réservoir 103 de stockage du produit pulvérulent, un conduit tubulaire 104 pénétrant dans le réservoir 103, ce conduit recevant un élément 105 de prélèvement et de transport du produit pulvérulent depuis une ouverture 106 radiale de chargement que présente le conduit 104 dans le réservoir 103 vers une ouverture de délivrance 107 que présente le conduit 104 à l'extérieur du réservoir, cette ouverture étant associée à un obturateur 108 porté par une tige axiale 109 fixée rigidement d'une part à l'organe récepteur 2 et d'autre part au réservoir 103, l'obturateur 108 et la tige 109 constituant l'organe de commande 101.

Le conduit 104 est rigidement fixé au bâti du dispositif 100 de façon à être immobilisé tant en translation qu'en rotation. La tige 109 dans le conduit 104 et dans le réservoir est dotée de l'élément 105 de transport de la poudre constitué par une spire enroulée autour de ladite tige 109.

Le manipulateur 1 selon l'invention permet de commander la distribution d'une quantité dosée de poudre par action du bras sur le récepteur 2 et par voie de conséquence par action sur la tige 109. Le déplacement en translation du récepteur 2 se traduit par le déplacement de l'obturateur 108 par rapport à l'ouverture de délivrance 107 que possède le conduit 104 et par le déplacement du réservoir 103 le long de ce conduit. Le déplacement en rotation de l'organe récepteur 2 se traduit par un déplacement en rotation de l'obturateur 108 par rapport au conduit et par une rotation du réservoir 103. Sous l'effet de cette mise en rotation, la poudre contenue dans le réservoir 103 est brassée grâce à l'action d'éléments de brassage 110 internes au réservoir.

Pour faciliter le chargement de la poudre dans le conduit 104, le réservoir présente un godet interne 111 de chargement apte lors de la rotation du réservoir 103 d'abord à se charger en produit pulvérulent et ensuite déverser ce produit dans le conduit104 au travers de l'ouverture radiale de chargement 106.

Préférentiellement, ce godet 111 est formé par un élément tubulaire prolongeant avantageusement l'ouverture de chargement du réservoir 103 et par le bouchon associé à cet élément tubulaire. Le godet 111 dans le réservoir 103, présente une extrémité en pointe formant déversoir, afin de faciliter le chargement du conduit 104.

## Revendications

1. Manipulateur (1) présentant un bras axialement extensible, avec carter (3), lequel bras porte en extrémité distale un organe (9) d'accouplement temporaire à un organe récepteur (2), pour pouvoir transmettre à ce dernier un mouvement de rotation et/ou un mouvement de translation selon un axe géométrique (AA') commun, dans lequel :
- l'organe d'accouplement temporaire (9) est doté d'au moins un élément saillant (10) ou au moins une cavité (20) d'accouplement apte à coopérer en relation d'accouplement par emboîtement de forme avec au moins une cavité (20) d'accouplement ou un élément saillant formé dans l'organe récepteur (2), de sorte que l'organe d'accouplement (9) est apte à transmettre un couple à l'organe récepteur (2),
- l'organe d'accouplement temporaire (9) est accouplé à l'extrémité distale d'un arbre de transmission de couple et de mouvement (8), s'étendant selon l'axe géométrique précité,
- l'arbre de transmission (8) est accouplé à l'arbre de sortie rotatif d'un organe moteur (7) du bras et porté par un support (6) mobile en translation et fixe en rotation actionné par un second organe moteur (4) du bras,
le manipulateur (1) étant en outre **caractérisé en ce que** : -
sur l'arbre de transmission (8) est montée de manière fixe en translation par rapport au dit arbre et avec une latitude de mouvement angulaire limité autour de l'axe géométrique (AA'), une pièce de verrouillage (11) présentant en extrémité distale au moins une saillie radiale de verrouillage (12),
- un moyen de frein, en position de complet déploiement du bras, agit sur la pièce de verrouillage (11) pour interdire la rotation de ladite pièce de verrouillage (11) autour de l'axe géométrique (AA'),
- l'organe d'accouplement temporaire (9) est apte à amener, par rotation de l'organe récepteur (2), une saillie radiale de verrouillage (21) dont est dotée l'organe récepteur (2) en arrière et en regard de la saillie de verrouillage (12) de la pièce de verrouillage (11), pour assurer une liaison en translation avec l'organe récepteur (2), ou bien est apte à dégager cette saillie, pour rompre la liaison en translation avec l'organe récepteur (2) et pouvoir désolidariser l'organe récepteur (2) de l'organe d'accouplement temporaire (9) par rétractation du bras, l'écart angulaire entre les saillies de verrouillage (12, 21) en position déverrouillée étant égale ou inférieure à l'amplitude du mouvement angulaire permis de la pièce de verrouillage (11) par rapport à l'arbre de transmission (8).

2. Manipulateur (1) selon la revendication 1, **caractérisé en ce que** l'élément saillant (10) que présente l'organe d'accouplement temporaire (9) est apte à être engagé en léger serrage dans la cavité (20) de l'organe récepteur (2).

3. Manipulateur (1) selon la revendication 1 ou la revendication 2, **caractérisé en ce que** l'élément saillant d'accouplement (10) que comporte l'organe d'accouplement temporaire (9) se développe de manière radiale par rapport à l'axe AA'.

4. Manipulateur (1) selon l'une quelconque des revendications précédentes, **caractérisé en ce que** l'organe d'accouplement (9) présente un noyau de forme cylindrique et que l'élément saillant d'accouplement (10) est radial au dit noyau et forme saillie sur la surface cylindrique de ce dernier.

5. Manipulateur (1) selon l'une quelconque des revendications 2 à 4, **caractérisé en ce que** l'organe d'accouplement temporaire (9) comporte plusieurs éléments saillants (10) angulairement répartis de manière régulière autour de l'axe AA', les dits éléments saillants (10) formant une denture d'engrenage.

6. Manipulateur (1) selon la revendication 5, **caractérisé en ce que** l'engrenage que forment les éléments saillants (10) est droit.

7. Manipulateur (1) selon la revendication 5, **caractérisé en ce que** l'engrenage que forment les éléments (10) est conique afin de faciliter l'engagement de cet engrenage dans l'engrenage délimité par les cavités (20).

8. Manipulateur (1) selon l'une quelconque des revendications précédentes, **caractérisé en ce que** la pièce de verrouillage (11) comporte plusieurs saillies radiales de verrouillage (12), angulairement réparties de manière régulière.

9. Manipulateur (1) selon l'une quelconque des revendications précédentes, **caractérisé en ce que** la pièce de verrouillage (11) se présente sous la forme d'un fourreau cylindrique avec alésage traversant cylindrique, l'arbre cylindrique de transmission (8) étant engagé dans ledit alésage, et la pièce de verrouillage (11) étant immobilisée en translation sur l'arbre de transmission (8) entre d'une part un collet (8a) que ce dernier comporte et d'autre part l'organe d'accouplement (9).

10. Manipulateur (1) selon l'une quelconque des revendications précédentes, **caractérisé en ce que** le moyen de frein comprend d'une part une saillie radiale d'arrêt (14) portée par la pièce de verrouillage (11) et d'autre part un élément fixe contre lequel est amenée en pression la saillie radiale (14) de la pièce de verrouillage (11) en position de complet déploiement du bras.

11. Manipulateur (1) selon la revendication 10, **caractérisé en ce que** la saillie radiale d'arrêt 14 présente au moins une face plane (141) perpendiculaire à l'axe (AA') destinée à être amenée en pression contre l'élément fixe pour réaliser la fonction de freinage.

12. Manipulateur (1) selon la revendication 10 ou la revendication 11, **caractérisé en ce que** le moyen de frein est interne au carter (3) du bras.

13. Manipulateur (1) selon la revendication 12, **caractérisé en ce que** la saillie d'arrêt (14) que possède la pièce de verrouillage (11) se présente sous la forme d'une couronne circulaire présentant deux faces planes opposées à savoir une face plane distale (141) et une face plane proximale (142), ces deux faces étant perpendiculaires à l'axe (AA').

14. Manipulateur (1) selon la revendication 12 ou la revendication 13, **caractérisé en ce que** l'élément fixe est une paroi fixe du bras.

15. Manipulateur (1) selon la revendication précédente, **caractérisé en ce que** la paroi fixe est constituée par la paroi terminale distale (31) du carter (3) du bras.

16. Manipulateur (1) selon l'une quelconque des revendications 12 à 15, **caractérisé en ce qu'**en position de complet déploiement du bras, la saillie radiale (14) par sa face distale (141) vient comprimer un organe élastiquement compressible (143) contre l'élément fixe, ce qui assure l'immobilisation en rotation de la pièce (11) sous l'effet de l'intensité des forces d'adhérences entre l'organe élastiquement compressible (143) et l'élément fixe d'une part et entre ledit organe (143) et la saillie radiale d'arrêt (14) d'autre part.

17. Manipulateur (1) selon la revendication précédente, **caractérisé en ce que** l'organe élastiquement compressible (143) est porté par la saillie d'arrêt (14) ou par la paroi fixe du bras.

18. Manipulateur (1) selon l'une quelconque des revendications 12 à 15, **caractérisé en ce que** la face distale (141) de la saillie d'arrêt (14) présente une bordure de frein (141 a) courant le long de son bord externe, ladite bordure de frein (141 a), en position de complet déploiement du bras, étant appliquée avec pression contre une bordure d'appui (141 b) formée sur l'élément fixe du bras.

19. Manipulateur (1) selon la revendication 10 ou la revendication 11, **caractérisé en ce que** le moyen de frein est externe au carter (3) du bras.

20. Manipulateur (1) selon la revendication précédente, **caractérisé en ce que** :
- la saillie radiale d'arrêt (14) du moyen de frein est portée en extrémité distale de la pièce de verrouillage (11),
- la pièce de verrouillage (11) en extrémité distale forme une cloche venant autour de la ou des saillie(s) de verrouillage (12) et autour de l'organe d'accouplement temporaire (9),
- en relation d'accouplement de l'organe (9) avec l'organe récepteur (2) ladite cloche vient autour de ce dernier et,
- la face plane (141) est formée par la rive distale de la cloche, ladite face (141) en position de complet déploiement du bras pouvant venir en pression contre un élément fixe constitué par une paroi (102) de l'appareil (100) à commander par l'intermédiaire de l'organe récepteur (2).

21. Manipulateur (1) selon l'une quelconque des revendications précédentes, **caractérisé par** un mécanisme d'indexation à bille (17) interposé entre la pièce de verrouillage (11) et l'organe d'accouplement temporaire (9) afin de verrouiller la rotation de ladite pièce de verrouillage (11) par rapport à l'arbre de commande (8) lorsque le moyen de frein n'agit plus sur ladite pièce, ledit mécanisme assurant de plus le maintien de la pièce (11) en appui contre un collet (8a) formé en extrémité distale de l'arbre (8).

22. Manipulateur (1) selon l'une quelconque des revendications précédentes, **caractérisé en ce que** l'un des éléments pièce de verrouillage (11) ou arbre de transmission (8) comporte un doigt saillant (15) et que l'autre élément possède un logement (16) pour recevoir le doigt saillant (15), ce logement selon une section droite, se développant en arc de circonférence de cercle, en sorte de limiter le mouvement de rotation de la pièce de verrouillage (11) par rapport à l'arbre de transmission (8).

23. Manipulateur (1) selon l'une quelconque des revendications précédentes, **caractérisé par** un organe élastique monté en compression entre une face de l'organe récepteur (2) et l'organe d'accouplement (9) pour exercer sur ce dernier un effort axial sous l'effet duquel, en position de verrouillage en translation, la ou les saillie(s) (12) de la pièce de verrouillage (11) soit ou soient fermement appliquée(s) contre la ou les saillie(s) (21) de l'organe récepteur (2) pour rattraper tout jeu axial entre ledit organe d'accouplement (9) et ledit organe récepteur (2).

24. Installation **caractérisée en ce qu'**elle comporte un manipulateur (1) selon l'une quelconque des revendications 1 à 23 au moins un appareil (100) avec organe de commande (101) associé à un organe récepteur (2).

25. Installation selon la revendication 24, **caractérisée en ce qu'**elle comporte plusieurs appareils (100), le manipulateur (1) étant déplaçable par rapport à ces appareils et étant positionnable sélectivement en regard de l'un de ces derniers.

26. Installation selon la revendication 25, **caractérisée en ce que** les appareils (100) sont disposés selon un plan horizontal en cercle autour du manipulateur (1) et que ledit manipulateur (1) est monté sur une tourelle d'orientation qui le positionne en regard de l'appareil (100) sélectionné.

27. Installation selon la revendication 25, **caractérisée en ce que** les appareils (100) sont organisés suivant une rangée et que le manipulateur est monté sur un chariot qui le positionne en regard de l'appareil (100) sélectionné.

28. Installation selon l'une quelconque des revendications 24 à 27, **caractérisée en ce que** chaque appareil (100) est constitué par un dispositif de dosage de produit pulvérulent, ce dispositif de dosage présentant un réservoir (103) de poudre, rotatif et un conduit (104) de distribution de cette poudre.

29. Installation selon la revendication 28 **caractérisée en ce que** le dispositif de dosage (100) comporte un réservoir (103) de stockage du produit pulvérulent, un conduit tubulaire (104) pénétrant dans le réservoir (103), ce conduit recevant un élément (105) de prélèvement et de transport du produit pulvérulent depuis une ouverture (106) radiale de chargement que présente le conduit (104) dans le réservoir (103) vers une ouverture de délivrance (107) que présente le conduit (104) à l'extérieur du réservoir, cette ouverture étant associée à un obturateur (108) porté par une tige axiale (109) fixée rigidement d'une part à l'organe récepteur (2) et d'autre part au réservoir (103), ce dernier pouvant coulisser sur le conduit (104) et se déplacer en rotation par rapport à ce dernier, l'obturateur (108) et la tige (109) constituant l'organe de commande (101).

30. Installation selon la revendication 28 ou la revendication 29 **caractérisée en ce que** le réservoir (103) présente un godet interne de chargement (111) apte lors de la rotation du réservoir (103) d'abord à se charger en produit pulvérulent et ensuite déverser ce produit dans le conduit de distribution (104).

## Patentansprüche

1. Manipulator (1), der einen axial ausziehbaren Arm aufweist, mit Gehäuse (3), wobei der Arm am distalen Ende ein Organ (9) zum vorübergehenden Ankoppeln an ein Aufnahmeorgan (2) trägt, um auf diesen letzteren eine Rotationsbewegung und/ oder eine Vorschubbewegung entlang einer gemeinsamen geometrischen Achse (AA') zu übertragen, wobei:
- das Organ (9) zum vorübergehenden Ankoppeln mit zumindest einem vorspringenden Element (10) oder zumindest einer Vertiefung (20) zum Ankoppeln versehen ist, die imstande sind, im Verhältnis zu einer Formschlusskupplung mit zumindest einer Vertiefung (20) zum Ankoppeln oder einem vorspringenden Element (10) zusammenzuwirken, das im Aufnahmeorgan (2) gebildet wird, sodass das Organ (9) zum Ankoppeln imstande ist, ein Moment auf das Aufnahmeorgan (2) zu übertragen,
- das Organ (9) zum vorübergehenden Ankoppeln an das distale Ende einer Welle zum Übertragen eines Moments und einer Bewegung (8) angekoppelt wird, das sich entlang der zuvor genannten geometrischen Achse erstreckt,
- die Welle zum Übertragen (8) an die Ausgangsrotationswelle eines Motororgans (7) des Arms angekoppelt wird und durch einen verschiebbaren und nicht drehbaren Halter (6) getragen wird, der durch ein zweites Motororgan (4) des Arms betätigt wird, wobei der Manipulator (1) darüber hinaus **dadurch gekennzeichnet ist, dass**:
- auf der Welle zum Übertragen (8) in nicht verschiebbarer Form im Verhältnis zur besagten Welle und mit einer eingeschränkten Winkelbewegungsbreite um die geometrische Achse (AA') ein Riegelteil (11) montiert ist, das am distalen Ende zumindest einen radialen Riegelvorsprung (12) aufweist,
- ein Bremsmittel in der voll ausgefahrenen Position des Arms auf das Riegelteil (11) einwirkt, um die Rotation des besagten Riegelteils (11) um die geometrische Achse (AA') zu unterbinden,
- das Organ (9) zum vorübergehenden Ankoppeln imstande ist, durch Rotation des Aufnahmeorgans (2) einen radialen Riegelvorsprung (21), mit dem das Aufnahmeorgan (2) versehen ist, hinten und gegenüber dem Riegelvorsprung (12) des Riegelteils (11) heranzuführen, um eine translationsfeste Verbindung mit dem Aufnahmeorgan (2) zu gewährleisten, oder imstande ist, diesen Vorsprung freizugeben, um die translationsfeste Verbindung mit dem Aufnahmeorgan (2) zu brechen, und um das Aufnahmeorgan (2) vom Organ (9) zum vorübergehenden Ankoppeln durch Einziehen des Arms lösen zu können, wobei der Winkelabstand zwischen den Riegelvorsprüngen (12, 21) in der freigegebenen Position kleiner oder gleich der erlaubten Winkelbewegungsamplitude des Riegelteils (11) im Verhältnis zur Welle zum Übertragen (8) ist.

2. Manipulator (1) nach Anspruch 1, **dadurch gekennzeichnet, dass** das vorspringende Element (10), das das Organ (9) zum vorübergehenden Ankoppeln aufweist, imstande ist, in einer leichten Klemmung in die Vertiefung (20) des Aufnahmeorgans (2) eingeführt zu werden.

3. Manipulator (1) nach Anspruch 1 oder Anspruch 2, **dadurch gekennzeichnet, dass** das vorspringende Koppelelement (10), das das Organ (9) zum vorübergehenden Ankoppeln umfasst, in radialer Form im Verhältnis zur Achse AA' entwickelt.

4. Manipulator (1) nach irgendeinem der vorherigen Ansprüche, **dadurch gekennzeichnet, dass** das Organ (9) zum Ankoppeln einen Kern in zylindrischer Form aufweist und das vorspringende Koppelelement (10) radial zum besagten Kern liegt, und einen Vorsprung auf der zylindrischen Oberfläche von letzterem bildet.

5. Manipulator (1) nach irgendeinem der Ansprüche 2 bis 4, **dadurch gekennzeichnet, dass** das Organ (9) zum vorübergehenden Ankoppeln mehrere vorspringende Elemente (10) umfasst, die winkelig in regelmäßiger Form um die Achse AA' verteilt sind, wobei die besagten vorspringenden Elemente (10) eine Getriebeverzahnung bilden.

6. Manipulator (1) nach Anspruch 5, **dadurch gekennzeichnet, dass** das Getriebe, das die vorspringenden Elemente (10) bilden, gerade ist.

7. Manipulator (1) nach Anspruch 5, **dadurch gekennzeichnet, dass** das Getriebe, das die vorspringenden Elemente (10) bilden, konisch ist, um den Eingriff dieses Getriebes in das Getriebe zu erleichtern, das durch die Vertiefungen (20) eingegrenzt wird.

8. Manipulator (1) nach irgendeinem der vorherigen Ansprüche, **dadurch gekennzeichnet, dass** das Riegelteil (11) mehrere radiale Riegelvorsprünge (12) umfasst, die winkelig in regelmäßiger Form verteilt sind.

9. Manipulator (1) nach irgendeinem der vorherigen Ansprüche, **dadurch gekennzeichnet, dass** sich das Riegelteil (11) in der Form einer zylindrischen Muffe mit einer zylindrischen Durchgangsbohrung darstellt, wobei die zylindrische Welle zur Übertragung (8) in die besagte Bohrung eingeführt ist, und das Riegelteil (11) auf der Welle zur Übertragung (8) zwischen einerseits einem Kragen (8a), den letztere umfasst, und andererseits dem Organ (9) zum Ankoppeln gegen Verschieben gesichert ist.

10. Manipulator (1) nach irgendeinem der vorherigen Ansprüche, **dadurch gekennzeichnet, dass** das Bremsmittel einerseits einen radialen Stoppvorsprung (14) umfasst, der durch das Riegelteil (11) getragen wird, und andererseits ein festes Element, an dem sich der radiale Vorsprung (14) des Riegelteils (11) bei voll ausgefahrenem Arm mit Druck anlegt.

11. Manipulator (1) nach Anspruch 10, **dadurch gekennzeichnet, dass** der radiale Stoppvorsprung (14) zumindest eine ebene Fläche (141) senkrecht zur Achse (AA') aufweist, die dazu bestimmt ist, sich mit Druck am festen Element anzulegen, um die Bremsfunktion auszuüben.

12. Manipulator (1) nach Anspruch 10 oder Anspruch 11, **dadurch gekennzeichnet, dass** sich das Bremsmittel innerhalb des Gehäuses (3) des Arms befindet.

13. Manipulator (1) nach Anspruch 12, **dadurch gekennzeichnet, dass** sich der Stoppvorsprung (14), den das Riegelteil (11) besitzt, in Form eines runden Kranzes darstellt, der zwei gegenüber liegende ebene Flächen aufweist, nämlich eine distale ebene Fläche (141) und eine proximale ebene Fläche (142), wobei diese beiden Flächen senkrecht zur Achse (AA') verlaufen.

14. Manipulator (1) nach Anspruch 12 oder Anspruch 13, **dadurch gekennzeichnet, dass** das feste Element eine feste Wand des Armes ist.

15. Manipulator (1) nach dem vorherigen Anspruch, **dadurch gekennzeichnet, dass** die feste Wand durch eine distale Abschlusswand (31) des Gehäuses (3) des Arms gebildet wird.

16. Manipulator (1) nach irgendeinem der Ansprüche 12 bis 15, **dadurch gekennzeichnet, dass** der radiale Vorsprung (14) in der voll ausgefahrenen Position des Arms mit seiner distalen Fläche (141) ein elastisch verdichtbares Organ (143) am festen Element andrückt, wodurch die Drehsicherung des Riegelteils (11) unter Einwirkung der Intensität der Haftungskräfte zwischen dem elastisch verdichtbaren Organ (143) und dem festen Element einerseits, und dem besagten Organ (143) und dem radialen Stoppvorsprung (14) andererseits gewährleistet wird.

17. Manipulator (1) nach dem vorherigen Anspruch, **dadurch gekennzeichnet, dass** das elastisch verdichtbare Organ (143) durch den Stoppvorsprung (14) oder durch die feste Wand des Arms getragen wird.

18. Manipulator (1) nach irgendeinem der Ansprüche 12 bis 15, **dadurch gekennzeichnet, dass** die distale Fläche (141) des Stoppvorsprungs (14) einen Bremsrand (141 a) aufweist, der entlang ihrer äußeren Kante verläuft, wobei der besagte Bremsrand (141 a) in der voll ausgefahrenen Position des Arms mit Druck an einen Auflagerand (141 b) angelegt wird, der auf dem festen Element des Arms gebildet wird.

19. Manipulator (1) nach Anspruch 10 oder Anspruch 11, **dadurch gekennzeichnet, dass** das Bremsmittel außerhalb des Gehäuses (3) des Arms liegt.

20. Manipulator (1) nach dem vorherigen Anspruch, **dadurch gekennzeichnet, dass**:
- der radiale Stoppvorsprung (14) des Bremsmittels am distalen Ende des Riegelteils (11) getragen wird,
- das Riegelteil (11) am distalen Ende eine Glocke bildet, die um den oder die Riegelvorsprung (-vorsprünge) (12) und um das Organ (9) zum vorübergehenden Ankoppeln verläuft,
- die besagte Glocke im Verhältnis zum Ankuppeln des Organs (9) mit dem Aufnahmeorgan (2) um letzteres verläuft, und
- die ebene Fläche (141) durch den distalen Rand der Glocke gebildet wird, wobei sich die besagte Fläche (141) in der voll ausgefahrenen Position des Arms mit Druck am festen Element anlegen kann, das durch eine Wand (102) des durch das Aufnahmeorgan (2) zu steuernden Geräts (100) gebildet wird.

21. Manipulator (1) nach irgendeinem der vorherigen Ansprüche, durch einen Kugel-Indexiermechanismus (17) gekennzeichnet, der zwischen das Riegelteil (11) und das Organ (9) zum vorübergehenden Ankoppeln gesetzt wird, um die Rotation des besagten Riegelteils (11) im Verhältnis zur Steuerwelle (8) zu verriegeln, wenn das Bremsmittel nicht mehr auf das besagte Teil einwirkt, wobei der besagte Mechanismus des Weiteren die Beibehaltung des Teils (11) auf Anlage an einem Kragen (8a) gewährleistet, der am distalen Ende der Welle (8) gebildet wird.

22. Manipulator (1) nach irgendeinem der vorherigen Ansprüche, **dadurch gekennzeichnet, dass** eines der Elemente des Riegelteils (11) oder der Welle (8) zum Übertragen einen vorspringenden Finger (15) umfasst, und dass das andere Element eine Aufnahme (16) zum Aufnehmen des vorspringenden Fingers (15) besitzt, wobei sich diese Aufnahme in einem geraden Abschnitt als Kreisumfangsbogen entwickelt, um die Rotationsbewegung des Riegelteils (11) im Verhältnis zur Welle (8) zum Übertragen einzugrenzen.

23. Manipulator (1) nach irgendeinem der vorherigen Ansprüche, durch ein elastisches Organ gekennzeichnet, das zusammengedrückt zwischen einer Fläche des Aufnahmeorgans (2) und dem Organ (9) zum Ankoppeln montiert ist, um auf letzteres eine Axialkraft auszuüben, unter deren Einwirkung der oder die Vorsprung (-sprünge) (12) des Riegelteils (11) in der translationsfesten Verbindung eng an dem (den) Vorsprung (-sprüngen) des Aufnahmeorgans (2) anliegt (-en), um das gesamte axiale Spiel zwischen dem besagten Organ (9) zum Ankoppeln und dem besagten Aufnahmeorgan (2) auszugleichen.

24. Installation, **dadurch gekennzeichnet, dass** sie einen Manipulator (1) nach irgendeinem der Ansprüche 1 bis 23 umfasst, zumindest ein Gerät (100) mit Steuerorgan (101), das einem Aufnahmeorgan (2) zugeordnet ist.

25. Installation nach Anspruch 24, **dadurch gekennzeichnet, dass** sie mehrere Geräte (100) umfasst, wobei der Manipulator (1) im Verhältnis zu diesen Geräten verschiebbar ist, und selektiv gegenüber einem der letzteren positioniert werden kann.

26. Installation nach Anspruch 25, **dadurch gekennzeichnet, dass** die Geräte (100) gemäß einer horizontalen Ebene in einem Kreis um den Manipulator (1) angeordnet sind, und dass der besagte Manipulator (1) auf einem Schwenkmechanismus montiert ist, der ihn gegenüber dem ausgewählten Gerät (100) positioniert.

27. Installation nach Anspruch 25, **dadurch gekennzeichnet, dass** die Geräte (100) gemäß einer Reihe organisiert sind, und dass der Manipulator auf einem Wagen montiert ist, der ihn gegenüber dem ausgewählten Gerät (100) positioniert.

28. Installation nach irgendeinem der Ansprüche 24 bis 27, **dadurch gekennzeichnet, dass** jedes Gerät (100) durch eine Dosiervorrichtung für ein pulverförmiges Produkt gebildet wird, wobei diese Dosiervorrichtung einen drehenden Pulverbehälter (103) und eine Leitung (104) zum Verteilen dieses Pulvers aufweist.

29. Installation nach Anspruch 28, **dadurch gekennzeichnet, dass** die Dosiervorrichtung (100) einen Behälter (103) zum Lagern des pulverförmigen Produkts umfasst, eine rohrförmige Leitung (104), die in den Behälter (103) eindringt, wobei diese Leitung ein Element (105) zur Entnahme und zum Transportieren des pulverförmigen Produkts aus einer radialen Ladeöffnung (106) aufnimmt, die die Leitung (104) im Behälter (103) aufweist, zu einer Abgabeöffnung (107), die die Leitung (104) außerhalb des Behälters aufweist, wobei diese Öffnung mit einem Verschluss (108) verbunden ist, der durch einen axialen Stift (109) getragen wird, der fest einerseits am Aufnahmeorgan (2) und andererseits am Behälter (103) befestigt ist, wobei dieser letztere auf der Leitung (104) gleiten kann, und sich im Verhältnis zu letzterem verdrehen kann, wobei der Verschluss (108) und der Stift (109) das Steuerorgan (101) darstellen.

30. Installation nach Anspruch 28 oder Anspruch 29, **dadurch gekennzeichnet, dass** der Behälter (103) einen internen Ladetopf (111) aufweist, der bei der Rotation des Behälters (103) imstande ist, sich zuerst mit dem pulverförmigen Produkt zu füllen, und dieses Produkt danach in die Verteilungsleitung (104) zu kippen.

## Claims

1. Manipulator (1) having an axially extendable arm, with casing (3), said arm bearing on a distal extremity a unit (9) for temporarily coupling to a receiving unit (2), in order to be able to transmit to the latter a rotational movement and/or a translational movement along a common geometric axis (AA'), wherein:
- the temporary coupling unit (9) is equipped with at least one protruding element (10) or at least one coupling cavity (20) able to cooperate in a coupling relationship by means of a corresponding shape with at least one coupling cavity (20) or one protruding element formed in the receiving unit (2), such that the coupling unit (9) is able to transmit torque to the receiving unit (2);
- the temporary coupling unit (9) is coupled to the distal extremity of a shaft transmitting torque and movement (8), extending along the abovementioned geometric axis;
- the transmission shaft (8) is coupled to the rotary output shaft of a motor unit (7) of the arm and borne by a mount (6) that is mobile in translation and fixed in rotation, actuated by a second motor unit (4) of the arm, the manipulator (1) being **characterized in that**:
- a locking member (11), having at the distal extremity at least one locking radial protrusion (12), is mounted on the transmission shaft (8) so as to be fixed in translation relative to said shaft and with a limited scope of angular movement around the geometric axis (AA');
- a braking means, in the fully deployed position of the arm, acts on the locking member (11) to prohibit the rotation of said locking member (11) around the geometric axis (AA');
- the temporary coupling unit (9) is able, by rotation of the receiving unit (2), to bring a locking radial protrusion (21) that the receiving unit (2) is fitted with behind and in front of the locking protrusion (12) of the locking member (11), to provide a linkage in translation with the receiving unit (2), or is able to disengage this protrusion, to break the linkage in translation with the receiving unit (2) and be able to detach the receiving unit (2) from the temporary coupling unit (9) by retracting the arm, the angular separation between the locking protrusions (12, 21) in the unlocked position being equal to or less than the range of the permitted angular movement of the locking member (11) relative to the transmission shaft (8).

2. Manipulator (1) according to claim 1, **characterized in that** the protruding element (10) with which the temporary coupling unit (9) is equipped is able to be engaged with light pressure in the cavity (20) of the receiving unit (2).

3. Manipulator (1) according to claim 1 or claim 2, **characterized in that** the protruding coupling element (10) that the temporary coupling unit (9) comprises extends radially relative to the axis AA'.

4. Manipulator (1) according to any one of the preceding claims, **characterized in that** the coupling unit (9) has a cylindrically-shaped core and **in that** the protruding coupling element (10) is radial to said core and forms a protrusion on the cylindrical surface of the latter.

5. Manipulator (1) according to any one of claims 2 to 4, **characterized in that** the temporary coupling unit (9) comprises several protruding elements (10) angularly distributed evenly around the axis AA', said protruding elements (10) forming gear teeth.

6. Manipulator (1) according to claim 5, **characterized in that** the gearing formed by the protruding elements (10) is straight.

7. Manipulator (1) according to claim 5, **characterized in that** the gearing formed by the protruding elements (10) is conical in order to facilitate this gearing's engagement in the gearing delimited by the cavities (20).

8. Manipulator (1) according to any one of the preceding claims, **characterized in that** the locking member (11) comprises several locking radial protrusions (12), angularly distributed evenly.

9. Manipulator (1) according to any one of the preceding claims, **characterized in that** the locking member (11) is in the form of a cylindrical sheath with a cylindrical through-hole, the cylindrical transmission shaft (8) being engaged within said hole, and the locking member (11) being immobilized in translation on the transmission shaft (8) between, firstly, a collar (8a) that the latter comprises and, secondly, the coupling unit (9).

10. Manipulator (1) according to any one of the preceding claims, **characterized in that** the braking means comprises, firstly, a radially protruding stop (14) borne by the locking member (11) and, secondly, a fixed element against which the radial protrusion (14) of the locking member (11) is brought to press in the fully deployed position of the arm.

11. Manipulator (1) according to claim 10, **characterized in that** the radially protruding stop 14 has at least one flat surface (141) perpendicular to the axis (AA') designed to be brought to press against the fixed element to achieve the braking function.

12. Manipulator (1) according to claim 10 or claim 11, **characterized in that** the braking means is inside the casing (3) of the arm.

13. Manipulator (1) according to claim 12, **characterized in that** the protruding stop (14), that the locking member (11) has, is in the form of a circular ring having two flat opposite surfaces, i.e. one distal flat surface (141) and one proximal flat surface (142), these two surfaces being perpendicular to the axis (AA').

14. Manipulator (1) according to claim 12 or claim 13, **characterized in that** the fixed element is a fixed wall of the arm.

15. Manipulator (1) according to the preceding claim, **characterized in that** the fixed wall is formed by the distal end wall (31) of the casing (3) of the arm.

16. Manipulator (1) according to any one of claims 12 to 15, **characterized in that**, in the fully deployed position of the arm, the radial protrusion (14) through its distal surface (141) compresses an elastically compressible unit (143) against the fixed element, which ensures the immobilization in rotation of the member (11) under the effect of the intensity of the adhesion forces between the elastically compressible unit (143) and the fixed element, on the one hand, and between said unit (143) and the radially protruding stop (14), on the other hand.

17. Manipulator (1) according to the preceding claim, **characterized in that** the elastically compressible unit (143) is borne by the protruding stop (14) or by the fixed wall of the arm.

18. Manipulator (1) according to any one of claims 12 to 15, **characterized in that** the distal surface (141) of the protruding stop (14) has a brake edging (141a) running the length of its outer edge, said brake edging (141a), in the fully deployed position of the arm, being applied with pressure against a bearing edge (141b) formed on the fixed element of the arm.

19. Manipulator (1) according to claim 10 or claim 11, **characterized in that** the braking means is outside the casing (3) of the arm.

20. Manipulator (1) according to the preceding claim, **characterized in that**:
- the radially protruding stop (14) of the braking means is borne at the distal extremity of the locking member (11);
- the locking member (11) at the distal extremity forms a bell going around the locking protrusion or protrusions (12) and around the temporary coupling unit (9);
- in the coupling relationship of the unit (9) with the receiving unit (2) said bell goes around the latter; and
- the flat surface (141) is formed by the distal edge of the bell, said surface (141) in the fully deployed position of the arm being able to press against a fixed element constituted by a wall (102) of the apparatus (100) to be controlled by means of the receiving unit (2).

21. Manipulator (1) according to any one of the preceding claims, **characterized by** a ball indexing mechanism (17) interposed between the locking member (11) and the temporary coupling unit (9) so as to lock the rotation of said locking member (11) relative to the control shaft (8) when the braking means is no longer acting on said member, said mechanism also maintaining the member (11) pressed against a collar (8a) formed on the distal extremity of the shaft (8).

22. Manipulator (1) according to any one of the preceding claims, **characterized in that** one of the elements locking member (11) or transmission shaft (8) comprises a protruding pin (15) and the other element has a housing (16) to receive the protruding pin (15), this housing, along a straight section, extending in a circumferential arc such as to limit the movement in rotation of the locking member (11) relative to the transmission shaft (8).

23. Manipulator (1) according to any one of the preceding claims, **characterized by** an elastic member mounted in compression between one surface of the receiving unit (2) and the coupling unit (9) to exert an axial force on the latter under the effect of which, in the position of locking in translation, the protrusion or protrusions (12) of the locking member (11) is or are applied firmly against the protrusion or protrusions (21) of the receiving unit (2) to compensate for any axial play between said coupling unit (9) and said receiving unit (2).

24. Installation, **characterized in that** it comprises a manipulator (1) according to any one of claims 1 to 23, at least one apparatus (100) with control unit (101) associated to a receiving unit (2).

25. Installation according to claim 24, **characterized in that** it comprises several apparatuses (100), the manipulator (1) being able to be moved relative to these apparatuses and being able to be positioned selectively opposite one of the latter.

26. Installation according to claim 25, **characterized in that** the apparatuses (100) are positioned along a horizontal plane in a circle around the manipulator (1) and **in that** said manipulator (1) is mounted on an orientation turret that positions it opposite the apparatus (100) selected.

27. Installation according to claim 25, **characterized in that** the apparatuses (100) are arranged in a row and **in that** the manipulator is mounted on a chariot that positions it opposite the apparatus (100) selected.

28. Installation according to any one of claims 24 to 27, **characterized in that** each apparatus (100) consists of a dosing device for a powdered product, this dosing device having a revolving powder container (103) and a pipe (104) for distributing this powder.

29. Installation according to claim 28, **characterized in that** the dosing device (100) comprises a container (103) for storing the powdered product, a tubular pipe (104) penetrating into the container (103), this pipe receiving an element (105) for collecting and transporting the powdered product from a radial loading opening (106), which the pipe (104) has within the container (103), to a delivery opening (107), which the pipe (104) has outside the container, this opening being associated to a plug (108) borne by an axial rod (109) fixed rigidly firstly to the receiving unit (2) and secondly to the container (103), the latter being able to slide on the pipe (104) and move in rotation relative to the latter, the plug (108) and the rod (109) constituting the control unit (101).

30. Installation according to claim 28 or claim 29, **characterized in that** the container (103) has an internal loading bucket (111) able, during the rotation of the container (103), firstly to be loaded with powdered product and then to discharge this product into the distribution pipe (104).
